# EUROPÄISCHE PATENTSCHRIFT

(11) **EP 0 832 680 B1**
(45) Veröffentlichungstag und Bekanntmachung des Hinweises auf die Patenterteilung: **12.12.2001**
(21) Anmeldenummer: 97113945.6
(22) Anmeldetag: 13.08.1997
(51) Int. Cl.: B01D 53/50, B01D 53/78

(54) **Verfahren zum Reinigen von Abgas aus Feuerungsanlagen für fossile Brennstoffe**
Process for cleaning exhaust gas from furnaces for fossil fuel
Procédé pour la purification de gaz d'échappement d'appareils de chauffage pour combustibles fossiles

(30) Priorität: 21.09.1996 DE 19638844
(43) Veröffentlichungstag der Anmeldung: 01.04.1998
(73) Patentinhaber: Lurgi Lentjes Bischoff GmbH, 45136 Essen (DE)
(72) Erfinder: Risse, Theo, Dipl.-Phys., 59368 Werner (DE)
(74) Vertreter: Albrecht, Rainer Harald, Dr.-Ing.

(56) Entgegenhaltungen:
- EP-A- 0 396 375
- EP-A- 0 437 941
- DE-A- 3 001 258
- DE-A- 19 502 066
- DE-U- 29 517 697

## Beschreibung

Die Erfindung betrifft ein Verfahren zum Reinigen von Abgas aus einer Feuerungsanlagen für fossile Brennstoffe, insbesondere von Abgas aus einem Kohlekraftwerk, wobei
das Abgas in einem Absorptionsturm mit Meerwasser beaufschlagt wird und
das mit Schwefelverbindungen beladene Meerwasser aus einem belüfteten Flüssigkeitssumpf des Absorptionsturmes abgezogen, zum Zwecke der Sulfatbildung und Neutralisation in einem Nachreaktionsbecken mit frischem Meerwasser gemischt sowie ins Meer zurückgeleitet wird.

Ein solches Verfahren ist aus DE-U 295 17 698.9 bekannt. Es wird zur Schwefeldioxid-Entfernung eingesetzt. Das Verfahren nutzt die im Meerwasser enthaltenen Bicarbonate für die Umsetzung des absorbierten SO₂ zu unschädlichen Calcium- und Magnesiumsulfaten. Calcium- und Magnesiumsulfate sind natürliche Bestandteile des Meerwassers, so daß die Einleitung der bei der SO₂-Absorptions anfallenden Reaktionsprodukte in das Meer unbedenklich ist. Auch die bei der Gaswäsche mit Meerwasser erreichbaren Reingaswerte erfüllen die Anforderung. Bei der Gaswäsche werden jedoch Feinstäube und Aerosole mitabgeschieden, die eine etwaige vorgeschaltete Elektrofilteranlage passiert haben. Sie sind Träger von Schwermetallen und werden mit der Waschflüssigkeit ins Meer geleitet. Daneben werden von der Waschflüssigkeit gas- und dampfförmige Emissionen, darunter insbesondere auch Quecksilber aufgenommen, die ohne Eliminierung oder Entgiftung mit der Waschflüssigkeit ins Meer abgeleitet werden. Die Einleitung von aus dem Abgas einer Feuerungsanlage stammenden Schwermetallemissionen ins Meer ist bedenklich.

Der Erfindung liegt die Aufgabe zugrunde, bei dem eingangs beschriebenen Verfahren die Schwermetallbelastung der ins Meer abgeleiteten Waschflüssigkeit zu reduzieren.

Zur Lösung dieser Aufgabe lehrt die Erfindung, daß das Abgas vor dem Eintritt in den Absorptionsturm in einem Vorwäscher mit Wasser gewaschen wird, welches in einem nur dem Vorwäscher zugeordneten Flüssigkeitskreislauf im Kreis geführt wird und Stäube, Aerosole sowie dampfförmige Schwermetallemissionen aus dem Abgas aufnimmt, und daß ein mit den aufgenommenen Schadstoffen angereicherter Konzentratstrom aus dem Flüssigkeitskreislauf abgezogen sowie entsorgt und die dem Flüssigkeitskreislauf entnommene Flüssigkeitsmenge durch Frischwasser ersetzt wird. Erfindungsgemäß wird dem Flüssigkeitskreislauf des Vorwäschers Meerwasser als Frischwasser zugeführt. - Das erfindungsgemäße Verfahren ermöglicht eine wirksame Abtrennung von Schwermetallemissionen aus dem Abgas und Anreicherung dieser Schadstoffe in dem Flüssigkeitskreislauf, der dem Vorwäscher zugeordnet ist.

Der aus dem Flüssigkeitskreislauf ausgeschleuste Konzentratstrom ist im Vergleich zu der im Flüssigkeitskreislauf umgewälzten Flüssigkeitsmenge sehr klein. Der pH-Wert der im Kreis geführten Flüssigkeit fällt aufgrund der aus dem Abgas aufgenommenen Emissionen ab und liegt im stark sauren Bereich. Die Schwermetallabscheidung leidet darunter nicht. Schwermetalle und insbesondere Quecksilber gehen in chloridischer Form (HgCl₂) in Lösung. Infolge der Kreislaufführung des Wassers ist die SO₂-Absorption im Vorwäscher beim stationären Betrieb der Anlage vernachlässigbar. Die SO₂-Absorption erfolgt - wie im Stand der Technik - im Absorptionsturm. Der sich im Waschflüssigkeitssumpf des Absorptionsturms einstellende pH-Wert ist von dem Betrieb des Vorwäschers unbeeinflußt.

In weiterer Ausgestaltung lehrt die Erfindung, daß das Abgas in einem erweiterten horizontalen Rohrabschnitt des an den Eintritt des Absorptionsturms angeschlossenen Abgaskanals mit dem im Flüssigkeitskreislauf geführten Wasser beaufschlagt wird, wobei das Wasser und das Abgas im Kreuzstrom geführt werden und dabei das Abgas durch einen Vorhang aus Flüssigkeitstropfen tritt. Das Massenverhältnis des im Kreis geführten Flüssigkeitsstroms und des Abgases beträgt vorzugsweise 3 bis 4.

Im Rahmen des erfindungsgemäßen Verfahrens bestehen verschiedene Möglichkeiten, um den aus dem Flüssigkeitskreislauf des Vorwäschers ausgeschleusten Konzentratstrom zu entsorgen. Im Rahmen der Erfindung liegt es, den Konzentratstrom einer Abwasseraufbereitungsanlage zuzuführen. Fehlt eine Abwasseraufbereitungsanlage, so kann der Konzentratstrom zum Zwecke der Entsorgung dem Brennstoff zugegeben werden, der anschließend verfeuert wird. Die dem Brennstoff durch Aufgabe des Konzentratstromes zugeführten Schwermetalle und Schwermetallverbindungen fallen beim Betrieb der Feuerungsanlage - im wesentlichen an Asche bzw. Flugasche gebunden - wieder aus. Asche und Flugasche stellen Senken dar, um die im Flüssigkeitskreislauf des Vorwäschers abgeschiedenen Schadstoffe aus dem Gesamtsystem zu entfernen. Eine weitere Möglichkeit für die erfindungsgemäße Entsorgung des Konzentratstromes besteht darin, daß der Konzentratstrom zur Befeuchtung von Asche verwendet wird, die beim Betrieb der Feuerungsanlage anfällt. Die Asche, die ohnehin eluierbare Schwermetalle und Schwermetallverbindungen enthält, kann nach der Befeuchtung durch den Konzentratstrom in an sich bekannter Weise entsorgt werden.

Vorteilhaft ist es, wenn das Abgas vor dem Vorwäscher im indirekten Wärmeaustausch mit dem aus dem Absorptionsturm abgezogenen Reingas gekühlt wird. Ferner empfiehlt die Erfindung, daß das Abgas vor Eintritt in den Vorwäscher in einer Elektrofilteranlage vorgereinigt wird.

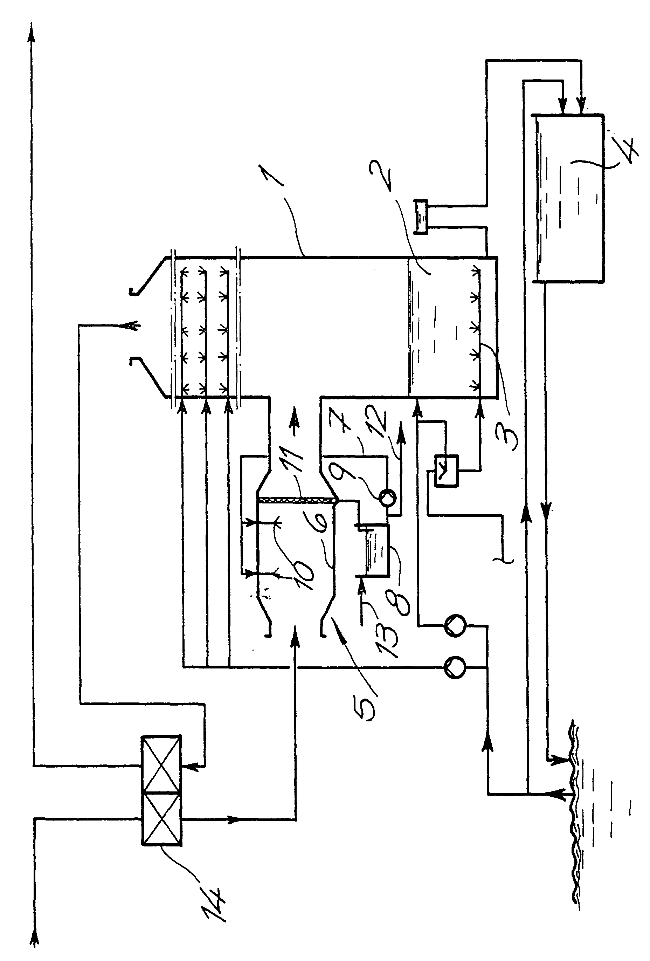

Im folgenden wird die Erfindung anhand einer lediglich ein Ausführungsbeispiel darstellenden Zeichnung erläutert. Die einzige Figur zeigt das Schema einer Anlage zum Reinigen von Abgas aus einer Feuerungsanlage für fossile Brennstoffe. Zum grundsätzlichen Aufbau der Anlage gehören ein Absorptionsturm 1, dessen Flüssigkeitssumpf 2 eine Belüftungseinrichtung 3 aufweist, ein Nachreaktionsbecken 4 sowie ein Vorwäscher 5. Das zu reinigende Abgas wird in dem Absorptionsturm 1 mit Meerwasser beaufschlagt. Das mit Schwefelverbindungen beladene Meerwasser wird aus dem belüfteten Flüssigkeitssumpf 2 abgezogen und zum Zwecke der Sulfatbildung und Neutralisation in dem Nachreaktionsbecken 4 mit frischem Meerwasser gemischt sowie anschließend ins Meer zurückgeleitet.

Der Vorwäscher 5 besteht aus einem erweiterten horizontalen Rohrabschnitt 6 des an den Eintritt des Absorptionsturms 1 angeschlossenen Abgaskanals. Dem Vorwäscher ist ein Flüssigkeitskreislauf 7 mit Ablaufbehälter 8, Umwälzpumpe 9 sowie Sprühdüsen 10 zugeordnet. Austrittsseitig ist der Vorwäscher mit einem Tropfenabscheider llausgerüstet, der den Eintritt von Flüssigkeittropfen in den Absorptionsturm 1 verhindert.

Das Abgas wird vor dem Eintritt in den Absorptionsturm 1 in dem Vorwäscher 5 mit Meerwasser gewaschen, welches im Flüssigkeitskreislauf 7 im Kreis geführt wird und Stäube, Aerosole sowie dampfförmige Schwermetallemissionen aus dem Abgas aufnimmt. Aerosole meint Partikel mit einem Partikeldurchmesser von weniger als 1 µm. Unter Stäuben sollen Partikel bis zu 500 µm, insbesondere aber Partikel von 1 bis 10 µm verstanden werden. Aus dem Flüssigkeitskreislauf 7 wird ein mit den aufgenommenen Schadstoffen angereicherter Konzentratstrom 12 abgezogen und entsorgt. Die dem Flüssigkeitskreislauf 7 entnommene Flüssigkeitsmenge wird durch Frischwasser 13 wieder ersetzt. Im Vorwäscher werden das zur Vorwäsche eingesetzte Wasser und das Abgas im Kreuzstrom geführt, wobei das Abgas durch einen Vorhang aus Flüssigkeitstropfen tritt. Üblicherweise wird im Vorwäscher 5 ein Flüssigkeits-/Gas-Massenverhältnis von 3 bis 4 eingestellt. Der aus dem Flüssigkeitskreislauf 7 ausgeschleuste Konzentratstrom 12 ist im Vergleich zu der umgewälzten Flüssigkeitsmenge sehr klein. Durch mengenmäßige Steuerung des Konzentratstroms 12 und des entsprechenden Frischwassermengenstroms ist die Schadstoffkonzentration im Flüssigkeitskreislauf einstell- und regelbar. Aufgrund der aus dem Abgas aufgenommenen Schadstoff-Emissionen stellt sich im Flüssigkeitskreislauf ein pH-Wert im sauren Bereich ein, der die Schwermetallabscheidung nicht beeinträchtigt. Bei kleinem pH-Wert kann Quecksilber selektiv in Form von HgCl₂ ausgewaschen werden.

Die Entsorgung des Konzentratstroms 12 kann auf verschiedene Weise erfolgen. Im Rahmen der Erfindung liegt es, den Konzentratstrom einer nichtdargestellten Abwasseraufbereitungsanlage zuzuführen. Ferner besteht die Möglichkeit, dem Konzentratstrom zum Zwecke der Entsorgung dem Brennstoff zuzugeben, der anschließend verfeuert wird. Die dritte Möglichkeit besteht darin, den Konzentratstrom zur Befeuchtung von Asche zu verwenden, die beim Betrieb der Feuerungsanlage anfällt.

Das Abgas wird vor dem Vorwäscher 5 in einem Wärmetauscher 14 mit dem aus dem Absorptionsturm 1 abgezogenen Reingas gekühlt. Es kann ferner eine (nicht dargestellte) Elektrofilteranlage vorgesehen sein, in der das Abgas vor Eintritt in den Vorwäscher 5 vorgereinigt wird.

## Patentansprüche

1. Verfahren zum Reinigen von Abgas aus einer Feuerungsanlage für fossile Brennstoffe, insbesondere von Abgas aus einem Kohlekraftwerk, wobei
das Abgas in einem Absorptionsturm mit Meerwasser beaufschlagt wird und
das mit Schwefelverbindungen beladene Meerwasser aus einem belüfteten Flüssigkeitssumpf des Absorptionsturmes abgezogen, zum Zwecke der Sulfatbildung und Neutralisation in einem Nachreaktionsbecken mit frischem Meerwasser gemischt sowie ins Meer zurückgeleitet wird,
- **dadurch gekennzeichnet, dass** das Abgas vor dem Eintritt in den Absorptionsturm in einem Vorwäscher mit Wasser gewaschen wird, welches in einem nur dem Vorwäscher zugeordneten Flüssigkeitskreislauf im Kreis geführt wird und Stäube, Aerosole sowie dampfförmige Schwermetallemissionen aus dem Abgas aufnimmt, dass ein mit den aufgenommenen Schadstoffen angereicherter Konzentratstrom aus dem Flüssigkeitskreislauf abgezogen sowie entsorgt und die dem Flüssigkeitskreislauf entnommene Flüssigkeitsmenge durch Frischwasser ersetzt wird und dass dem Flüssigkeitskreislauf des Vorwäschers Meerwasser als Frischwasser zugeführt wird.

2. Verfahren nach Anspruch 1, **dadurch gekennzeichnet, daß** das Abgas in einem erweiterten horizontalen Rohrabschnitt des an den Eintritt des Absorptionsturm angeschlossenen Abgaskanals mit dem im Flüssigkeitskreislauf geführten Wasser beaufschlagt wird, wobei das Wasser und das Abgas im Kreuzstrom geführt werden und dabei das Abgas durch einen Vorhang aus Flüssigkeitstropfen tritt.

3. Verfahren nach einem der Ansprüche 1 bis 2, **dadurch gekennzeichnet, daß** das Massenverhältnis (L/G) des im Kreis geführten Flüssigkeitsstroms und des Abgases 3 bis 4 beträgt.

4. Verfahren nach einem der Ansprüche 1 bis 3, **dadurch gekennzeichnet, daß** der Konzentratstrom zum Zwecke der Entsorgung dem Brennstoff zugegeben wird, der anschließend verfeuert wird.

5. Verfahren nach einem der Ansprüche 1 bis 3, **dadurch gekennzeichnet, daß** der Konzentratstrom zur Befeuchtung von Asche verwendet wird, die beim Betrieb der Feuerungsanlage anfällt.

6. Verfahren nach einem der Ansprüche 1 bis 5, **dadurch gekennzeichnet, daß** das Abgas vor dem Vorwäscher im indirekten Wärmeaustausch mit dem aus dem Absorptionsturm abgezogenen Reingas gekühlt wird.

7. Verfahren nach einem der Ansprüche 1 bis 6, **dadurch gekennzeichnet, daß** das Abgas vor Eintritt in den Vorwäscher in einer Elektrofilteranlage vorgereinigt wird.

## Claims

1. A process for cleaning waste gas from a combustion installation for fossil fuels, particularly for cleaning waste gas from a coal-fired power station, wherein
the waste gas is acted upon by sea water in an absorption tower, and
sea water which contains sulphur compounds is taken off from an aerated liquid bottom of the absorption tower, is mixed with fresh sea water in an afterreaction pond for the purpose of sulphate formation and neutralisation, and is fed back into the sea.
**characterised in that** before it enters the absorption tower the waste gas is scrubbed in a preliminary scrubber with water. which is fed in circulation in a liquid circuit which is associated with the preliminary scrubber only, and which absorbs dust and aerosols, as well as heavy metal emissions in the form of vapours, from the waste gas, that a concentrate stream which is enriched with the absorbed pollutants is taken off from the liquid circuit and is disposed of and the amount of liquid which is taken off from the liquid circuit is replaced by fresh water, and that sea water is fed as fresh water to the liquid circuit of the preliminary scrubber.

2. A process according to claim 1, **characterised in that** the waste gas is acted upon by the water which is conveyed in the liquid circuit in a widened horizontal tubular section of the waste gas duct which is attached to the inlet of the absorption tower, wherein the water and the waste gas are fed in cross-flow and in the course of this procedure the waste gas passes through a curtain of liquid drops.

3. A process according to either one of claims 1 to 2, **characterised in that** the ratio by mass (L/G) of the circulated liquid stream to the waste gas ranges from 3 to 4.

4. A process according to any one of claims 1 to 3, **characterised in that** the concentrate stream is added for the purpose of its disposal to the fuel which is subsequently burnt.

5. A process according to any one of claims 1 to 3, **characterised in that** the concentrate stream is used for the moistening of ash which is formed during the operation of the combustion installation.

6. A process according to any one of claims 1 to 5, **characterised in that** the waste gas is cooled upstream of the preliminary scrubber by indirect heat exchange with the clean gas taken off from the absorption tower.

7. A process according to any one of claims 1 to 6, **characterised in that** before it enters the preliminary scrubber the waste gas is pre-purified in an electrostatic filter installation.

## Revendications

1. Procédé d'épuration des gaz de combustion dans une installation de chauffe utilisant des combustibles fossiles, en particulier dans une centrale au charbon, dans lequel
- les gaz de combustion sont soumis à un lavage avec de l'eau de mer dans une tour d'absorption, et
- l'eau de mer chargée en composés soufrés est prélevée dans une cuve ventilée de collecte de liquide de la tour d'absorption, est mélangée à de l'eau de mer fraîche à des fins de formation de sulfates et de neutralisation dans un bassin de post-réaction, puis est rejetée dans la mer,
**caractérisé en ce que** les gaz de combustion, avant leur entrée dans la tour d'absorption, sont lavés dans un dispositif de prélavage avec de l'eau qui circule en circuit fermé exclusivement dans un circuit de liquide associé au dispositif de prélavage, **en ce qu'**un flux de concentrat chargé en substances toxiques récupérées est prélevé sur le circuit de liquidé et éliminé, **en ce que** le volume de liquide prélevé sur le circuit de liquide est complété avec de l'eau fraîche et **en ce que** de l'eau de mer est introduite comme eau fraîche dans le circuit de liquide du dispositif de prélavage.

2. Procédé selon la revendication 1, **caractérisé en ce que** les gaz de combustion sont lavés avec l'eau introduite dans le circuit de liquide, dans un tronçon de tuyauterie horizontal du conduit de gaz de combustion connecté à l'entrée de la tour d'absorption, l'eau et les gaz de combustion étant introduits en des flux croisés et les gaz de combustion traversant un rideau de gouttelettes de liquide.

3. Procédé selon une des revendications 1 à 2, **caractérisé en ce que** le rapport massique (L/G) du débit de liquide circulant en circuit fermé et des gaz de combustion est de 3 à 4.

4. Procédé selon une des revendications 1 à 3, **caractérisé en ce que** le débit de concentrât, à des fins d'élimination, est ajouté au combustible qui est ensuite brûlé.

5. Procédé selon une des revendications 1 à 3, **caractérisé en ce que** le débit de concentrat est utilisé pour mouiller les cendres générées par l'exploitation de l'installation de chauffe

6. Procédé selon une des revendications 1 à 5, **caractérisé en ce que** les gaz de combustion, avant le dispositif de prélavage, sont refroidis par échange indirect de chaleur avec le gaz épuré, extrait de la tour d'absorption.

7. Procédé selon une des revendications 1 à, **caractérisé en ce que** les gaz de combustion, avant leur entrée dans le dispositif de prélavage, sont soumis à une épuration préalable dans un électrofiltre.
